# EUROPEAN PATENT APPLICATION

(11) **EP 4 276 927 A1**
(43) Date of publication of application: **15.11.2023**
(21) Application number: 21917577.5
(22) Date of filing: 17.11.2021
(51) Int. Cl.: H01M 4/02, H01M 4/04, H01M 4/13, H01M 4/139, H01M 4/62

(54) **ELECTRODE, METHOD FOR PRODUCING SAME, AND BATTERY**

(30) Priority: 08.01.2021 JP 2021001896
(71) Applicant: Japan Aerospace Exploration Agency, Tokyo 182-8522 (JP)
(72) Inventor: HOSONO, Eiji, Tsukuba-shi, Ibaraki 305-8560 (JP); ASAKURA, Daisuke, Tsukuba-shi, Ibaraki 305-8560 (JP); KITAURA, Hirokazu, Tsukuba-shi, Ibaraki 305-8560 (JP); SONE, Yoshitsugu, Chofu-shi, Tokyo 182-8522 (JP); TAKAHASHI, Ayaka, Chiba-shi, Chiba 263-8522 (JP)
(74) Representative: Jones, Nicholas Andrew
(86) International application number: PCT/JP2021/042168
(87) International publication number: WO 2022/149352

(57) **Abstract**

Provided are: an electrode and a method for producing the same, with which it is possible to produce a primary battery or a secondary battery having excellent characteristics such as environment resistance; and a battery provided with the electrode. This electrode is for a primary battery or a secondary battery, and comprises a current collector and an active material layer provided on the surface of the current collector. The active material layer is composed of: a plurality of active material particles; and a layered metal sulfide for filling portions between the plurality of active material particles.

## Description

### TECHNICAL FIELD

The present invention relates to an electrode, a method for producing the electrode, and a battery.

### BACKGROUND ART

To create a society capable of sustainable development, it is essential to reduce carbon dioxide emissions. Under such circumstances, research and development of energy storage devices and development of innovative materials have been conducted actively. In particular, secondary batteries such as lithium-ion batteries are regarded as an important technology that enables the production of clean energy and thus attract high attention. Batteries are also important as energy sources in aviation and space environments, and there is a high demand for the development of batteries that show stable and high performance in such environments.

In the research and development of batteries, it is desirable to improve energy density, charge-discharge cycle characteristics, and safety, which applies not only to stationary batteries but also to on-board batteries. Especially in aviation and space environments, the amount of radiation and heat load is large. This means that batteries for use in such environments are required to have not only high charge-discharge performance but also high environmental resistance, such as high radiation resistance and high heat resistance.

A process for producing a conventional battery includes an electrode forming process including: mixing an active material, a conductive aid, a binder, such as a binder resin, and a solvent to form a slurry; applying the slurry to the surface of a current collector; and drying the applied slurry. For example, Patent Document 1 discloses a non-aqueous secondary battery having a positive electrode plate including: a positive electrode current collector; and a positive electrode material mixture layer formed through applying, onto the current collector, a positive electrode material mixture paint, which is a dispersion of a mixture of an active material, a conductive material, and a binder in a dispersion medium, in which the active material includes at least a lithium-containing complex oxide (see claim 1 of Patent Document 1).

Also proposed is a battery having a binder-free electrode, which neither contains a conductive aid nor a binder. For example, Patent Document 2 discloses a binder-free battery including: a positive electrode member including a conductive member and a thin film provided on the surface of the conductive member and including a Prussian blue type cyanobridged metal complex as an active material, the thin film neither containing a conductive material nor a binder; a negative electrode member opposed to the positive electrode member; and an electrolyte including a lithium salt and being in contact with the positive and negative electrode members (see claim 1 of Patent Document 2).

Patent Document 1: Japanese Unexamined Patent Application, Publication No. 2010-061819
Patent Document 2: PCT International Publication No. WO2012/127790

### DISCLOSURE OF THE INVENTION

Although batteries have been developed from various perspectives as mentioned above, there is still room for improvement in conventional batteries. Specifically, battery electrodes contain a conductive aid such as carbon black and a binder such as a binder resin. The binder includes an organic component that has low environmental resistance, such as low radiation resistance or low heat resistance. Thus, the properties of conventional batteries are unstable for use in harsh environments, such as aviation and space applications. Moreover, conductive aids and binders have a very low ability to store lithium (Li). This means that lithium-ion batteries produced using conductive aid- or binder-containing electrodes have a limit in improving their energy density.

Although the battery proposed in Patent Document 2 has a binder-free electrode, its electrode material is required to be produced through electrodeposition on a current collector. Such electrodeposition has difficulty in forming a film of a large-capacitive lithium transition metal oxide, such as LiMO₂, in which M is Ni, Co, or Mn. Therefore, the technique disclosed in Patent Document 2 has difficulty in forming large-capacity batteries and also has a limit in improving energy density. Moreover, Patent Document 2 states nothing about batteries' environmental resistance and is unclear about whether the disclosed battery has environmental resistance, such as radiation resistance.

### Problems to be Solved by the Invention

The inventors have conducted intensive studies in view of such problems with the conventional art. As a result, the inventors have found that a layered metal sulfide can function as a conductive aid, a binder, and a solid lubricant and that batteries with high environmental resistance and other excellent properties can be produced using an electrode active material layer containing active material particles and such a functional layered metal sulfide.

The present invention has been completed based on such findings, and it is an object of the present invention to provide an electrode that helps to produce a primary or secondary battery with high environmental resistance and other excellent properties, to provide a method for producing such an electrode, and to provide a battery having such an electrode.

### Means for Solving the Problems

The present invention encompasses aspects (1) to (10) shown below. In the present description, any numerical range specified using "to" refers to a range including the upper and lower limits of the range. In other words, the expression "X to Y" has the same meaning as "X or more and Y or less".

(1) An electrode for use in a primary or secondary battery, the electrode including: a current collector; and an active material layer provided on a surface of the current collector,
   the active material layer including: multiple active material particles; and a layered metal sulfide that fills a space between the multiple active material particles.
(2) The electrode according to aspect (1), in which the layered metal sulfide is at least one selected from the group consisting of a transition metal dichalcogenide intercalation compound, iron(II) sulfide (FeS), copper(II) sulfide (Cu₂S), bornite (Cu₅FeS₄), and tin(II) sulfide (SnS).
(3) The electrode according to aspect (2), in which the layered metal sulfide is a transition metal dichalcogenide intercalation compound that is at least one selected from the group consisting of molybdenum disulfide (MoS₂), tungsten disulfide (WS₂), tantalum disulfide (TaS₂), niobium disulfide (NbS₂), titanium disulfide (TiS₂), chromium tantalum disulfide (CrTaS₂), silver niobium disulfide (AgNbS₂), copper niobium disulfide (CuNbS₂), chromium tantalum disulfide (CrTaS₂), silver titanium disulfide (AgTiS₂), and copper titanium disulfide (CuTiS₂).
(4) The electrode according to any one of aspects (1) to (3), in which the active material layer contains the layered metal sulfide in an amount of 5.0 mass% or more and 50.0 mass% or less.
(5) The electrode according to any one of aspects (1) to (4), in which the active material layer contains the layered metal sulfide in an amount of 10.0 mass% or more and 50.0 mass% or less.
(6) The electrode according to any one of aspects (1) to (5), in which the active material layer has a surface with a coefficient of sliding friction of 0.01 to 0.60.
(7) The electrode according to any one of aspects (1) to (6), in which the content of any component other than the active material particles and the layered metal sulfide in the active material layer is 0.1 mass% or less.
(8) A primary or secondary battery including at least: a positive electrode; a negative electrode; and an electrolyte, at least one of the positive electrode or the negative electrode being the electrode according to any one of aspects (1) to (7).
(9) The primary or secondary battery according to aspect (8), in which the battery is for use in a high radiation environment.
(10) A method for producing the electrode according to any one of aspects (1) to (7), the method including the steps of:
   preparing a raw material mixture including active material particles and a layered metal sulfide;
   forming a layer of the raw material mixture on a surface of a current collector to form a precursor layer; and
   subjecting the precursor layer to pressing to form an active material layer.

### Effects of the Invention

The present invention provides an electrode that helps to produce a primary or secondary battery with high environmental resistance and other excellent properties, provides a method for producing such an electrode, and provides a battery having such an electrode.

### BRIEF DESCRIPTION OF THE DRAWINGS

FIG. 1A is a scanning electron microscopy (SEM) image of a WS₂ powder;
FIG. 1B is an SEM image of the WS₂ powder;
FIG. 2A is an SEM image showing a surface of an active material layer in Example 1;
FIG. 2B is an SEM image showing a surface of the active material layer in Example 1;
FIG. 2C is an SEM image showing a surface of the active material layer in Example 1;
FIG. 2D is an SEM image showing a surface of the active material layer in Example 1;
FIG. 3A is an SEM image showing a surface and cross-section of the active material layer in Example 1;
FIG. 3B is an SEM image showing a surface and cross-section of the active material layer in Example 1;
FIG. 3C is an SEM image showing a surface and cross-section of the active material layer in Example 1;
FIG. 3D is an SEM image showing a surface and cross-section of the active material layer in Example 1;
FIG. 4 is a graph showing the charge-discharge curves of a battery obtained in Example 1;
FIG. 5 is a graph showing the charge-discharge curves of a battery obtained in Example 2;
FIG. 6 is a graph showing the charge-discharge curves of a battery obtained in Example 3;
FIG. 7 is a graph showing the cycle characteristics of the batteries obtained in Examples 1 to 3; and
FIG. 8 is a graph showing coefficients of sliding friction for lubrication with layered metal sulfides.

### PREFERRED MODE FOR CARRYING OUT THE INVENTION

Specific modes of the present invention (hereinafter referred to as "embodiments") will be described. It should be noted that the embodiments described below are not intended to limit the present invention and may be altered or modified in various ways without departing from the gist of the present invention.

### 1. Electrode

The electrode according to an embodiment is for use in a primary or secondary battery. The electrode may be a positive electrode or a negative electrode. However, the electrode according to an embodiment is preferably for use in a secondary battery and more preferably for use in a lithium-ion battery. This is because the use of the electrode makes it possible to create a lithium-ion battery with not only high environmental resistance but also high energy density and excellent cycle characteristics.

The electrode according to an embodiment includes a current collector and an active material layer provided on the surface of the current collector. The current collector may include a known material. The current collector including such a material may be a foil or plate including at least one selected from the group consisting of aluminum (Al), copper (Cu), nickel (Ni), iron (Fe), and alloys thereof. For example, in a case where the electrode is a positive electrode of lithium-ion batteries, the current collector may be an aluminum (Al) foil. In a case where the electrode is a negative electrode of lithium-ion batteries, the current collector may be a copper (Cu) foil.

The active material layer includes a layered metal sulfide and multiple active material particles. In other words, the active material particle and the layered metal sulfide are discrete components of the active material layer. The active material particles may include a known material. For example, in a case where the electrode is a positive electrode of lithium-ion batteries, the positive electrode active material may include a lithium transition metal complex oxide, such as LiCoO₂, LiMn₂O₄, LiNiO₂, LiFePO₄, Li₂FePO₄F, and/or Li(Co,Ni,Mn)O₂. In a case where the electrode is a negative electrode of lithium-ion batteries, the negative electrode active material may include a titanate salt, such as Li₄Ti₅O₁₂, graphite, hard carbon, Si, and/or Ge.

In the active material layer, the layered metal sulfide fills the spaces between the multiple active material particles. The layered metal sulfide is a metal sulfide having a layered crystal structure. The active material layer having a structure with the layered metal sulfide filling the spaces between active material particles can form a battery with various excellent properties, such as high environmental resistance, high energy density, and excellent cycle characteristics.

Specifically, the layered metal sulfide has high environmental resistance. For example, the layered metal sulfide has high heat stability, and its properties vary little with temperature. The layered metal sulfide is also characterized by being stable in radiation environments. Thus, the use of the layered metal sulfide makes it possible to provide batteries with high environmental resistance. In contrast, binder resins used as binders in the conventional art have low heat stability. Binder resins also undergo polymerization reaction in radiation environments, and thus their properties are prone to deterioration. Therefore, when used in high radiation environments, such as aviation environments, space environments, and/or nuclear power plants, binder resin-containing batteries may have unstable properties and sometimes not work.

The layered metal sulfide also functions as a solid lubricant. Such a functional layered metal sulfide is effective in the production of batteries with higher energy density. Specifically, the layered metal sulfide has a layered crystal structure and low interlayer bonding strength. For example, tungsten disulfide (WS₂) has a layered lattice structure with a hexagonal crystal structure. Such a crystal structure includes layers that are stacked in the (0001) direction and each layer has a structure having a tungsten (W) atom sandwiched between sulfur (S) atoms on both sides. While atoms in each of the layers are covalently bonded together (strong bonding forces), the layers are bonded by van der Waals forces (weak bonding forces). Thus, the layered metal sulfide can easily undergo interlayer delamination or otherwise easily undergo interlayer slip. Moreover, the uppermost and lowermost layers of the layered structure have the property of easily adhering to other materials.

When added in the process of forming the active material layer, the layered metal sulfide with such properties will effectively impart lubricity to the active material particles during the pressing step so that they can move smoothly. This will result in the formation of a densely packed active material layer. After the formation of the active material layer, the layered metal sulfide deposited on the active material particles will prevent them from coming off. This will increase the ability of the active material layer to retain its shape. In this regard, the layered metal sulfide may be considered to function as a forming aid and a binder. The use of the layered metal sulfide with such functions also makes it possible to form a dense active material layer. The use of such a dense active material layer enables the production of batteries with high capacity and thus high energy density.

The layered metal sulfide also has semiconducting properties and functions as a conductive aid. For example, tungsten disulfide (WS₂) has n-type semiconducting properties, and its electrical conductivity is approximately 10⁻³ S/cm. Thus, the layered metal sulfide can serve as an alternative to conductive aids widely used in the conventional art, such as carbon black. Moreover, the layered metal sulfide is capable of storing lithium (Li) and functions as an active material. For example, tungsten disulfide (WS₂) and molybdenum disulfide (MoS₂) are known to have a lithium storage capacity of approximately 200 mAh/g in the 2 V region. In fact, the inventors have succeeded in developing batteries with good charge-discharge characteristics by using the layered metal sulfide instead of carbon black or other conductive aids.

As described above, a dense active material layer is successfully obtained using a mixture of an active material and the layered metal sulfide, which can function as a solid lubricant, a conductive aid, and an active material. It is also possible to reduce or eliminate the usage of conductive aids or binders that are widely used in the conventional art but have poor environmental resistance and a poor ability to store lithium (Li). These features act in a combined way to enable the production of batteries with high environmental resistance and high energy density.

In addition, the layered metal sulfide acts as a stress relieving material. Thus, the use of the electrode according to an embodiment makes it possible to provide lithium-ion batteries with improved cycle characteristics. Specifically, in lithium-ion batteries, the active material expands and contracts as it stores and releases lithium (Li) ions during charging and discharging. For example, silicon (Si)-based materials have very high theoretical capacities and are promising as negative electrode active materials, but as they store lithium (Li), their volume increases to 300 to 400% of their original volume. Lithium transition metal complex oxides, which are used as positive electrode active materials, also change their volume as they store and release lithium, although their volume change is not so much as the volume change of the silicon-based material. If the active material changes its volume, stress will occur in the active material layer and may cause various problems. For example, during charge-discharge cycles, stress may cause a conductive path in the electrode to break or may cause the active material to come off, so that the cycle characteristics of the battery may significantly deteriorate. To address this problem, the layered metal sulfide, which functions as a solid lubricant, is provided between the active material particles to act as a stress relieving material, so that it will prevent the deterioration of cycle characteristics and other problems.

Furthermore, the layered metal sulfide added to the active material layer is expected to be effective in preventing the elution of the active material particles. If in direct contact with an electrolyte, the active material particles may be eroded by the electrolyte so that they may be eluted. To address this problem, the layered metal sulfide may be coated on the surfaces of the active material particles to function as a protective film, which will result in the prevention of the elution of the active material particles.

The layered metal sulfide is preferably one selected from the group consisting of a transition metal dichalcogenide intercalation compound, iron(II) sulfide (FeS), copper(II) sulfide (Cu₂S), bornite (Cu₅FeS₄), and tin(II) sulfide (SnS). The layered metal sulfide is more preferably a transition metal dichalcogenide intercalation compound that is at least one selected from the group consisting of molybdenum disulfide (MoS₂), tungsten disulfide (WS₂), tantalum disulfide (TaS₂), niobium disulfide (NbS₂), titanium disulfide (TiS₂), chromium tantalum disulfide (CrTaS₂), silver niobium disulfide (AgNbS₂), copper niobium disulfide (CuNbS₂), chromium tantalum disulfide (CrTaS₂), silver titanium disulfide (AgTiS₂), and copper titanium disulfide (CuTiS₂). These compounds have a lubricating effect.

The active material layer preferably contains the layered metal sulfide in an amount of 5.0 mass% or more and 50.0 mass% or less. At a content of 5.0 mass% or more, the layered metal sulfide will fully exert its advantages to further improve the capacity and cycle characteristics of batteries. On the other hand, when the content of the layered metal sulfide is 50.0 mass% or less, the content of the active material particles can be not so low as to cause deterioration of battery characteristics. The content of the layered metal sulfide is more preferably 10.0 mass% or more and 50.0 mass% or less.

The active material layer preferably has a surface with a coefficient of sliding friction of 0.01 to 0.60. The surface of the active material layer according to an embodiment has a low coefficient of sliding friction because the active material layer contains the layered metal sulfide, which functions as a solid lubricant. The active material layer with such a low coefficient of sliding friction will prevent active material volume change-induced damage to battery components. For example, a typical secondary battery includes positive and negative electrodes, a separator between the electrodes, and an electrolyte. In such a secondary battery, the positive and negative electrodes change their volume during charging and discharging. In response to the volume change, stress occurs in the electrode and may cause cracking in the electrode active material or cause the electrode active material to come off from any conductive aid or binder. The active material layer with a low coefficient of sliding friction, however, can reduce the concentration of stress and prevent the deterioration of the electrode even when the positive electrode and/or the negative electrode significantly changes its volume. The coefficient of sliding friction is more preferably 0.40 or less, even more preferably 0.20 or less, furthermore preferably 0.10 or less, most preferably 0.05 or less.

In the active material layer, the content of any component other than the active material particles and the layered metal sulfide is preferably 0.1 mass% or less, more preferably 0.01 mass% or less. The active material layer may have a composition including: the active material particles; the layered metal sulfide; and a remainder of unavoidable impurities. As used herein, the term "unavoidable impurities" refers to components unavoidably incorporated during the production of the electrode. The content of unavoidable impurities in the active material layer is typically 100 ppm or less. As mentioned above, batteries used in the conventional art have an active material layer containing large amounts of a conductive aid such as carbon black and a binder such as a binder resin. Since the binder resin and carbon black have a poor ability to store lithium (Li), the use of an active material layer containing large amounts of such components will make it difficult to produce highcapacity batteries. The binder resin also has low environmental resistance, especially low radiation resistance. For example, it is known that when irradiated with radiation, polyvinylidene fluoride (PVdF), which is widely used as a binder resin, undergoes cross-linking polymerization, mainchain scission, and hydrogen fluoride elimination reaction. Therefore, reducing the content of other components such as binder resins and carbon black will more effectively help to improve environmental resistance and energy density.

The electrode according to an embodiment is advantageous in forming batteries with improved environmental resistance. Thus, the electrode according to an embodiment is useful for primary batteries, such as manganese batteries, alkaline batteries, silver oxide batteries, primary lithium batteries, and zinc air batteries, and secondary batteries, such as nickel-cadmium batteries, nickel-hydrogen batteries, lithium-ion batteries, and lead batteries. The electrode according to an embodiment, which is effective in improving not only environmental resistance but also energy density and cycle characteristics, is useful for secondary batteries, especially for lithium-ion batteries.

### 2. Battery

The battery according to an embodiment is a primary or secondary battery. The battery includes at least a positive electrode, a negative electrode, and an electrolyte, in which at least one of the positive electrode or the negative electrode is the electrode described above. Specifically, the layered metal sulfide may be contained in one or both of the active material layers of the positive and negative electrodes. The positive and negative electrodes may have the composition described above.

Examples of the battery include known primary or secondary batteries. Specifically, the battery may be a primary battery, such as a manganese battery, an alkaline battery, a silver oxide battery, a primary lithium battery, or a zinc air battery, or a secondary battery, such as a nickel-cadmium battery, a nickel-hydrogen battery, a lithium-ion battery, or a lead battery. The battery is preferably a secondary battery, more preferably a lithium-ion battery.

The electrolyte may include a known material. For example, the electrolyte for a lithium-ion battery may be a non-aqueous solution of an electrolyte salt in a non-aqueous solvent. Examples of the electrolyte salt include inorganic ionic salts, such as LiClO₄, LiBF₄, LiAsF₆, LiPF₆, LiSCN, LiBr, LiI, Li₂SO₄, Li₂B₁₀Cl₁₀, NaClO₄, NaI, NaSCN, NaBr, KClO₄, and KSCN; and organic ionic salts, such as LiCF₃SO₃, LiN(CF₃SO₂)₂, LiN (C₂F₅SO₂)₂, LiN (CF₃SO₂)(C₄F₉SO₂), LiC(CF₃SO₂)₃, LiC(C₂F₅SO₂)₃, (CH₃)₄NBF₄, (CH₃)₄NBr, (C₂H₅)₄NClO₄, (C₂H₅)₄NI, (C₃H₇)₄NBr, (n-C₄H₉)₄NClO₄, (n-C₄H₉)₄NI, (C₂H₅)₄N-maleate, (C₂H₅)₄N-benzoate, (C₂H₅)₄N phthalate, lithium stearyl sulfonate, lithium octyl sulfonate, and lithium dodecylbenzenesulfonate, which may be used alone or in any combination. Examples of the non-aqueous solvent include cyclic carbonate esters, such as propylene carbonate, ethylene carbonate, butylene carbonate, chloroethylene carbonate, and vinylene carbonate; cyclic esters, such as γ-butyrolactone and γ-valerolactone; chain carbonates, such as dimethyl carbonate, diethyl carbonate, and ethyl methyl carbonate; chain esters, such as methyl formate, methyl acetate, and methyl butyrate; tetrahydrofuran or derivatives thereof; ethers, such as 1,3-dioxane, 1,4-dioxane, 1,2-dimethoxyethane, 1,4-dibutoxyethane, and methyl diglyme; nitriles, such as acetonitrile and benzonitrile; dioxolan or derivatives thereof; and ethylene sulfide, sulfolane, sultone, or derivatives thereof, which may be used alone or in any combination.

The battery may include a separator between the positive and negative electrodes. The separator may be a porous membrane, such as a nonwoven fabric. The separator may be made of, for example, polyolefin resin, such as polyethylene or polypropylene, polyester resin, such as polyethylene terephthalate or polybutylene terephthalate, polyvinylidene fluoride, vinylidene fluoride-hexafluoropropylene copolymer, vinylidene fluoride-perfluorovinyl ether copolymer, vinylidene fluoride-tetrafluoroethylene copolymer, vinylidene fluoridetrifluoroethylene copolymer, vinylidene fluoridefluoroethylene copolymer, vinylidene fluoridehexafluoroacetone copolymer, vinylidene fluoride-ethylene copolymer, vinylidene fluoride-propylene copolymer, vinylidene fluoride-trifluoropropylene copolymer, vinylidene fluoride-tetrafluoroethylene-hexafluoropropylene copolymer, or vinylidene fluoride-ethylene-tetrafluoroethylene copolymer.

The battery may have any suitable known structure. For example, the battery may have a structure including a positive electrode, a negative electrode, an electrolyte, an optional separator, and an outer case in which the electrodes, the electrolyte, and the optional separator are sealed. The battery may be of any suitable shape, such as a cylindrical shape, a rectangular shape, a button shape, or a laminate.

The battery is preferably for use in a high radiation environment. As used herein, the term "high radiation environment" refers to an environment with a high radiation level, such as an aviation environment, a space environment, and/or a nuclear power plant. The battery according to an embodiment has excellent properties (high energy density and excellent cycle characteristics) and high environmental resistance. Thus, the battery is particularly suitable for use in high radiation environments.

### 3. Method for Producing the Electrode

A method for producing the electrode according to an embodiment includes the steps of: preparing a raw material mixture including active material particles and a layered metal sulfide (preparation step); forming a layer of the raw material mixture on a surface of a current collector to form a precursor layer (layer formation step); and subjecting the precursor layer to pressing to form an active material layer (pressing step). Hereinafter, each of the steps will be described in detail.

### Preparation Step

The preparation step includes preparing a raw material mixture including active material particles and a layered metal sulfide. The active material particles may include a known material. For example, the active material particles may include a lithium transition metal complex oxide, such as LiCoO₂, LiMn₂O₄, LiNiO₂, LiFePO₄, Li₂FePO₄F, or Li(Co,Ni,Mn)O₂, a titanate salt, such as Li₄Ti₅O₁₂, graphite, hard carbon, Si, and/or Ge. The layered metal sulfide may include at least one selected from the group consisting of a transition metal dichalcogenide intercalation compound, iron(II) sulfide (FeS), bornite (Cu₅FeS₄), and tin(II) sulfide (SnS).

### Preparation Step

The active material particles and the layered metal sulfide may be mixed by a known method, which may be either a dry or wet method. During the mixing, the mixture may be subjected to griding. For example, the mixing may be performed using a known mixer or a known mixing and griding machine, such as a mortar, a stone mill, a twin-shaft mixer, a V-type mixer, a Henschel mixer, a disperser, a ball mill, an attritor, a vibration mill, or a jet mill. A solvent may be added for wet mixing. Such a solvent may be a known organic solvent, such as N-methylpyrrolidone.

The layered metal sulfide is preferably mixed in an amount of 5.0 mass% or more and 50.0 mass% or less, more preferably 10.0 mass% or more and 50.0 mass% or less, based on the total amount of the active material particles and the layered metal sulfide. The mixing may be performed in such a way that the resulting active material layer contains such an amount of other components than the active material particles and the layered metal sulfide as not to exceed the amount of unavoidable impurities. An organic solvent may be added during wet mixing since it can be evaporated and removed in the subsequent step.

### Layer Formation Step

The layer formation step includes forming a layer of the prepared raw material mixture on a surface of a current collector to form a precursor layer. The raw material mixture layer may be formed by a known method. For example, such a known method includes applying the raw material mixture to the surface of the current collector. The current collector may be a known material, such as a foil or plate including aluminum (Al), copper (Cu), nickel (Ni), iron (Fe), or any alloy thereof. In a case where the raw material mixture contain a solvent, the raw material mixture layer is preferably dried for removal of the solvent after being formed.

### Pressing Step

The pressing step includes subjecting the prepared precursor layer to pressing to form an active material layer. In this step, a dense active material layer can be obtained. The pressing may include applying a pressure to the precursor layer, which is provided on the surface of the current collector, using a press machine, such as a roll press. Even when the pressing is performed at a low pressure, a sufficiently dense active material layer can be obtained since the precursor layer contains the layered metal sulfide, which functions as a solid lubricant.

The electrode according to an embodiment is produced as described above.

### EXAMPLES

The present invention will be described in more detail with reference to the examples below. The examples below, however, are not intended to limit the present invention.

### (1) Production of Electrodes and Batteries

### Example 1

In Example 1, an electrode was prepared using lithium cobaltate (LiCoO₂ (LCO)) as an active material and using tungsten disulfide (WS₂) as a layered metal sulfide. The mass ratio of lithium cobaltate to tungsten disulfide was set to 2:1 (LCO:WS₂). Specifically, the electrode was prepared by the following procedure.

### Preparation Step

An LCO powder (EQ-Lib-LCO manufactured by MTI) consisting of a large number of LCO particles was provided as the active material. A WS₂ powder (WS2-W manufactured by Taiyo Koko Co., Ltd.) was provided as the layered metal sulfide.

The LCO powder, the WS₂ powder, and N-methylpyrrolidone (NMP) (solvent) were then mixed in a mortar to form a raw material mixture. The LCO powder, the WS₂ powder, NMP were mixed in a mass ratio of 1200:600:400 (LCO powder : WS₂ powder : NMP). The ratio of the mass of WS₂ to the total mass of LCO and WS₂ was 33.3 mass%.

### Layer Formation Step

The prepared raw material mixture was applied onto a current collector and dried to form a precursor layer. The current collector was an aluminum (Al) foil. The application was followed by vacuum drying at 100°C.

### Pressing Step

Next, the precursor film on the current collector was subjected to a roll treatment with a small tabletop heat roll press machine (HSR-60150H, Hohsen Corporation) to form an active material layer. The resulting active material layer had a thickness of approximately 25 um. Thus, an electrode was prepared including the current collector and the active material layer on the surface of the current collector.

### Fabrication of Battery

A battery to be evaluated was fabricated using the resulting electrode as a positive electrode. Specifically, in a glove box filled with argon gas, a 2032-type coin cell was fabricated by sealing the positive electrode, a negative electrode, a separator, and an electrolytic solution in an outer case. The negative electrode was made of metallic Li, and the separator was a polypropylene membrane. The electrolytic solution was an organic electrolytic solution containing 1 M of LiPF₆ dissolved in a mixed solvent of ethylene carbonate and diethyl carbonate.

### Example 2

A raw material mixture was prepared by mixing the LCO powder, the WS₂ powder, and NMP in a mass ratio of 1200:200:325 (LCO powder : WS₂ powder : NMP). The ratio of the mass of WS₂ to the total mass of LCO and WS₂ was 14.3 mass%. An electrode and a battery were prepared as in Example 1 except for the above.

### Example 3

A raw material mixture was prepared by mixing the LCO powder, the WS₂ powder, and NMP in a mass ratio of 1200:100:300 (LCO powder : WS₂ powder : NMP). The ratio of the mass of WS₂ to the total mass of LCO and WS₂ was 7.7 mass%. An electrode and a battery were prepared as in Example 1 except for the above.

### (2) Evaluation

The layered metal sulfide (e.g., WS₂ powder), the electrodes, and the batteries were evaluated for various properties as described below.

### SEM Observation

The WS₂ powder and the electrode active material layer were observed using a scanning electron microscope (SEM) (JSM-IT200 manufactured by JEOL Ltd.). The observation was performed at an acceleration voltage of 20.0 kV.

### Charge-Discharge Characteristics

Each of the prepared batteries was subjected to a cycle test between 3.0 V and 4.2 V (versus Li/Li⁺) at 25°C for evaluation of the charge-discharge characteristics. During the test, the 1st to 5th charge-discharge cycle profiles were obtained under constant-current conditions at 0.05 A/g, and the 6th to 10th charge-discharge cycle profiles were obtained under constant-current conditions at 0.1 A/g. Moreover, the 11th to 15th charge-discharge cycle profiles were obtained under constant-current conditions at 0.2 A/g. In this regard, the values (0.05 to 0.2 A/g) are each the current per 1 g of LiCoO₂. Furthermore, the capacity was determined from the resulting charge-discharge curve.

### Friction Characteristics

The WS₂ and MoS₂ powders, which are layered metal sulfides, were each formed into a 10 um-thick film by binder sintering. The films were each subjected to a pin-on-disk type friction test with reciprocating motion under a load of 10 N at a speed of 10 mm/s with a friction distance of 10 mm in an environment at a degree of vacuum of 10⁻⁵ Pa and a temperature of 22 to 24°C. Both of the films were found to exhibit a low coefficient of friction.

### (3) Evaluation Results

### SEM Observation

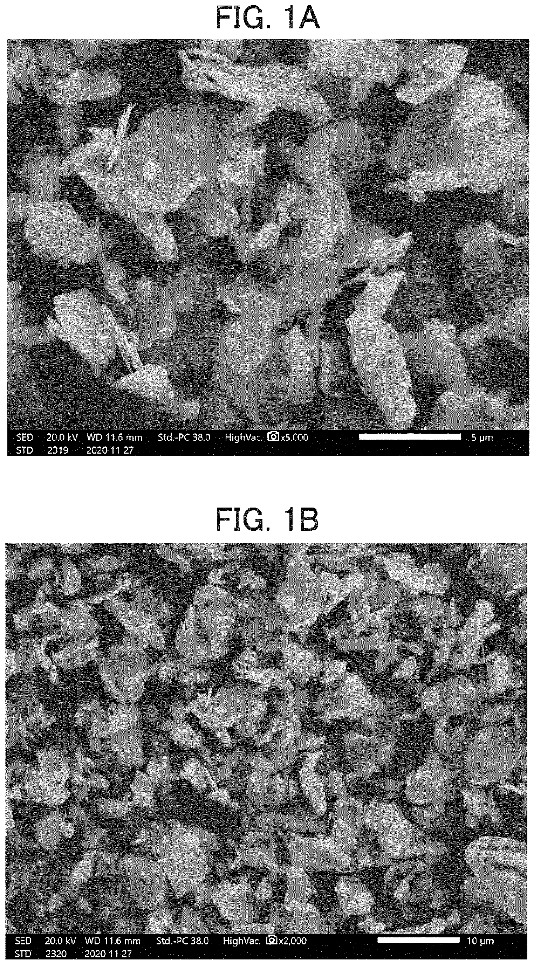

FIGS. 1A and 1B show SEM images of the WS₂ powder used as the raw material. The SEM images of FIGS. 1A and 1B were obtained at magnifications of 5000× and 2000×. FIGS. 1A and 1B indicate that the WS₂ particles are in the form of plates or scales.

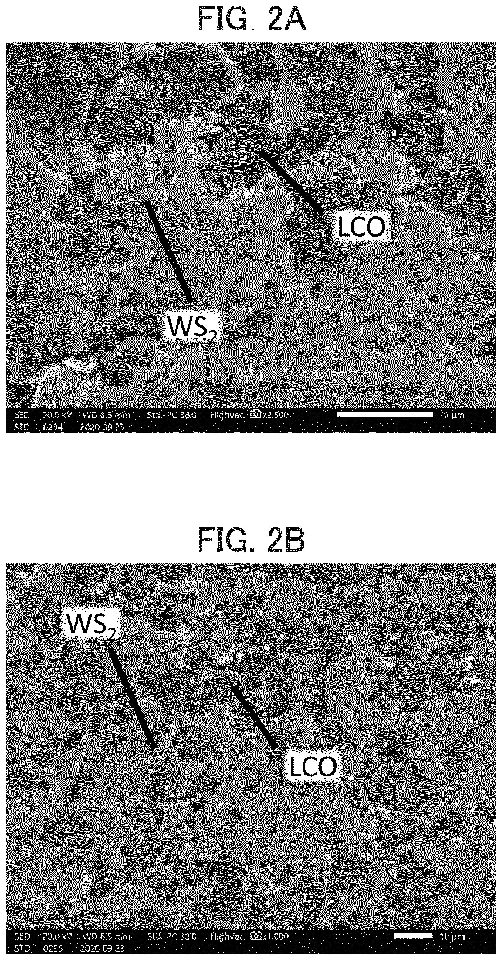

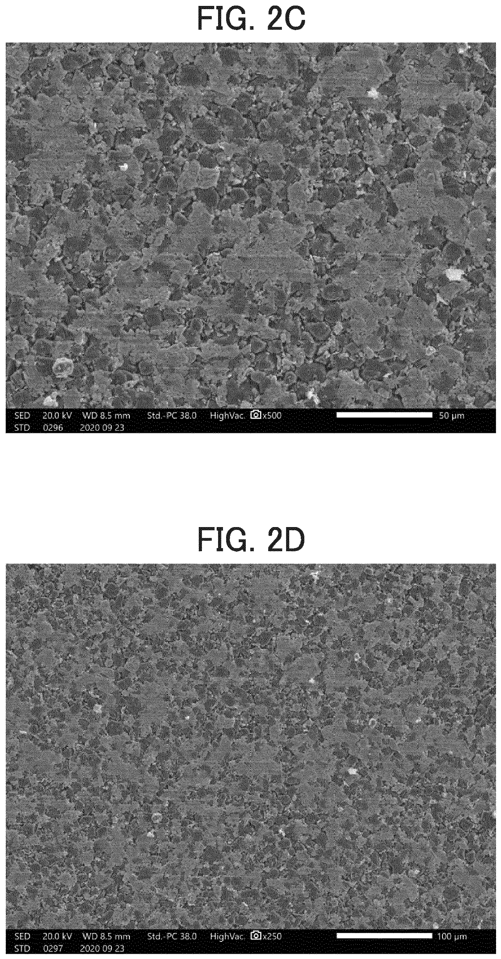

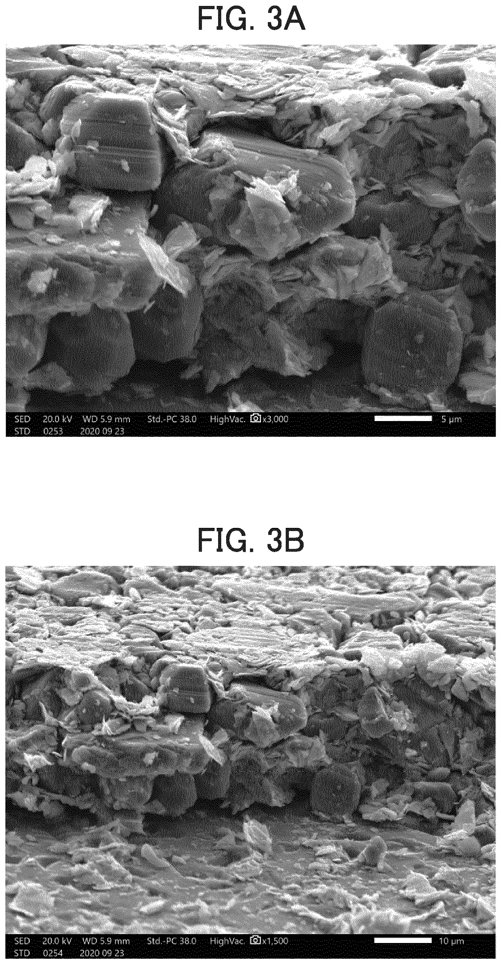

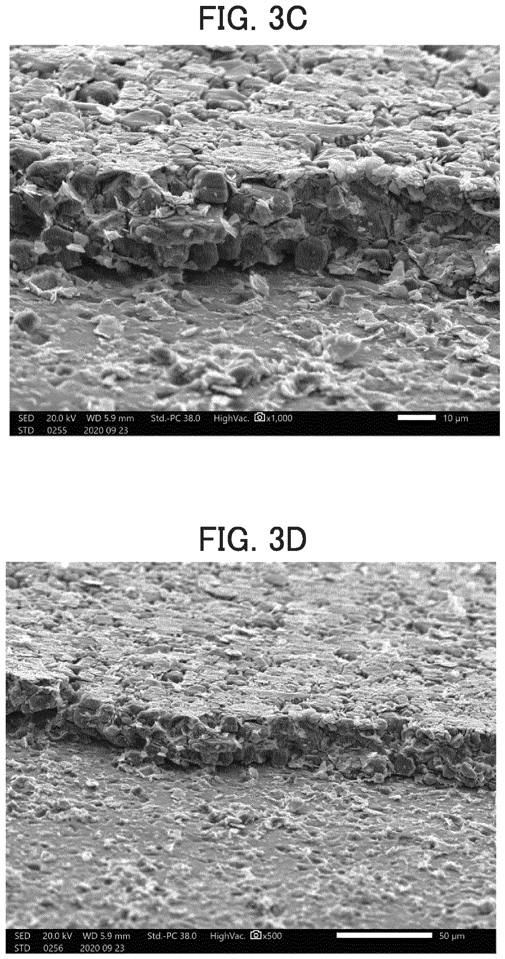

FIGS. 2A to 2D and FIGS. 3A to 3D show SEM images of the active material layer obtained in Example 1. The SEM images of FIGS. 2A and 3A were obtained at a magnification of 2500×. The SEM images of FIGS. 2B and 3B were obtained at a magnification of 1000×. The SEM images of FIGS. 2C and 3C were obtained at a magnification of 500×. The SEM images of FIGS. 2D and 3D were obtained at a magnification of 250×**.** FIGS. 2A to 2D are top surface images of the active material layer, and FIGS. 3A to 3D are tilt images of the active material layer.

The SEM images indicate that the layered metal sulfide WS₂ fills the spaces between LCO particles (active material particles) and that the active material layer is densely formed. In particular, the low magnification images (FIGS. 2D and 3D) show that there are no large voids in the active material layer. It has also been found that some of the WS₂ particles are in the form of flakes. This suggests that during the pressing, WS₂ has functioned as a solid lubricant and helped to form a dense active material layer of LCO particles.

### Charge-Discharge Characteristics

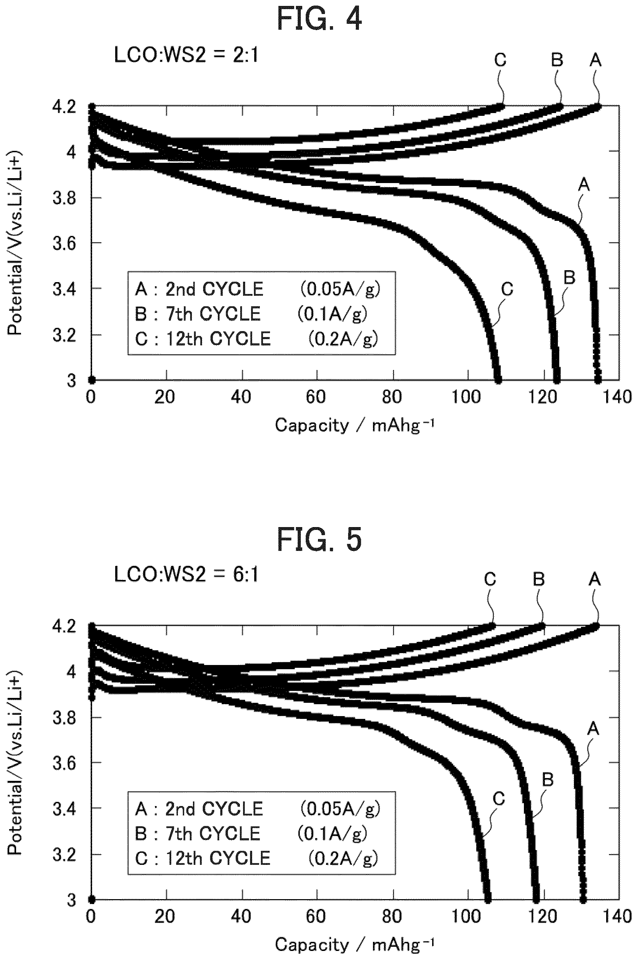

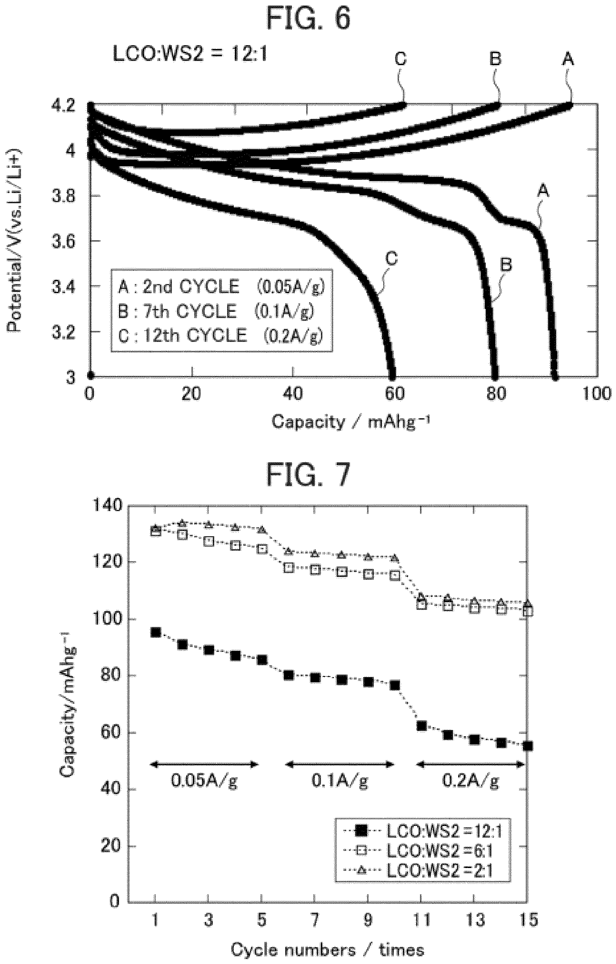

FIGS. 4 to 6 show the charge-discharge curves at the 2nd, 7th, and 12th cycles of the batteries obtained in Examples 1 to 3. FIG. 7 shows the cycle characteristics of the batteries. All the samples had relatively high capacities. In particular, the samples of Examples 1 and 2, in which the WS₂ content was high, had high capacities. Moreover, all the samples maintained their capacity even after the increase in current density by four times (from 0.05 A/g to 0.2 A/g). This indicates that WS₂ contributed to the increase in current density.

### Coefficient of Sliding Friction

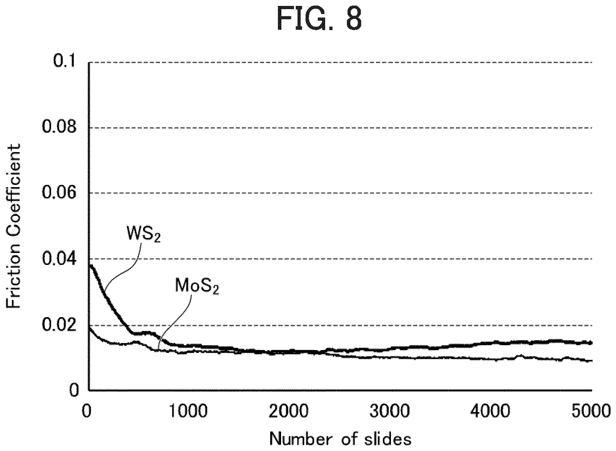

FIG. 8 shows the results of the sliding friction test on the lubricating films of the layered metal sulfides MoS₂ and WS₂ used to fill the spaces between the electrode active material particles. Soft and highly lubricant materials are considered useful as fillers to fill spaces in electrode active material layers. The test results shown in FIG. 8 demonstrate that MoS₂ and WS₂ both exhibited a low coefficient of sliding friction of 0.1 or less throughout the test while WS₂ exhibited a slightly higher level than MoS₂. The two materials exhibited coefficients of sliding friction of 0.02 to 0.01 during the latter half of the test, which indicates that they have high lubricating performance. Layered metal sulfides with such properties should be used as fillers for electrode active materials.

## Claims

1. An electrode for use in a primary or secondary battery, the electrode comprising: a current collector; and an active material layer provided on a surface of the current collector,
the active material layer comprising: a plurality of active material particles; and a layered metal sulfide that fills a space between the plurality of the active material particles.

2. The electrode according to claim 1, wherein the layered metal sulfide is at least one selected from the group consisting of a transition metal dichalcogenide intercalation compound, iron(II) sulfide (FeS), copper(II) sulfide (Cu₂S), bornite (Cu₅FeS₄), and tin(II) sulfide (SnS).

3. The electrode according to claim 2, wherein the layered metal sulfide is a transition metal dichalcogenide intercalation compound that is at least one selected from the group consisting of molybdenum disulfide (MoS₂), tungsten disulfide (WS₂), tantalum disulfide (TaS₂), niobium disulfide (NbS₂), titanium disulfide (TiS₂), chromium tantalum disulfide (CrTaS₂), silver niobium disulfide (AgNbS₂), copper niobium disulfide (CuNbS₂), chromium tantalum disulfide (CrTaS₂), silver titanium disulfide (AgTiS₂), and copper titanium disulfide (CuTiS₂).

4. The electrode according to any one of claims 1 to 3, wherein the active material layer contains the layered metal sulfide in an amount of 5.0 mass% or more and 50.0 mass% or less.

5. The electrode according to any one of claims 1 to 4, wherein the active material layer contains the layered metal sulfide in an amount of 10.0 mass% or more and 50.0 mass% or less.

6. The electrode according to any one of claims 1 to 5, wherein the active material layer has a surface with a coefficient of sliding friction of 0.01 to 0.60.

7. The electrode according to any one of claims 1 to 6, wherein the content of any component other than the active material particles and the layered metal sulfide in the active material layer is 0.1 mass% or less.

8. A primary or secondary battery comprising at least: a positive electrode; a negative electrode; and an electrolyte, at least one of the positive electrode or the negative electrode being the electrode according to any one of claims 1 to 7.

9. The primary or secondary battery according to claim 8, wherein the battery is for use in a high radiation environment.

10. A method for producing the electrode according to any one of claims 1 to 7, the method comprising the steps of:
preparing a raw material mixture comprising active material particles and a layered metal sulfide;
forming a layer of the raw material mixture on a surface of a current collector to form a precursor layer; and
subjecting the precursor layer to pressing to form an active material layer.
